# FASCICULE DE BREVET EUROPEEN

(11) **EP 0 914 620 B1**
(45) Date de publication et mention de la délivrance du brevet: **02.01.2004**
(21) Numéro de dépôt: 97935608.6
(22) Date de dépôt: 23.07.1997
(51) Int. Cl.: G01S 13/86

(54) **SYSTEME D'OBSERVATION OU DE VISEE**
BEOBACHTUNGS- UND ZIELSYSTEM
OBSERVATION OR SIGHTING SYSTEM

(30) Priorité: 24.07.1996 FR 9609290
(43) Date de publication de la demande: 12.05.1999
(73) Titulaire: Sagem S.A., 75015 Paris (FR); THOMSON CSF, 75008 Paris (FR)
(72) Inventeur: THOMAS, Pierre, F-91370 Verrières-le-Buisson (FR); ROY, Jean-Claude, F-91190 Gif-sur-Yvette (FR); PERTHUIS, Denis, F-45140 Saint-Jean-de-la-Ruelle (FR)
(74) Mandataire: Schrimpf, Robert
(86) Numéro de dépôt international: PCT/FR1997/001373
(87) Numéro de publication internationale: WO 1998/003882

(56) Documents cités:
- EP-A- 0 362 914
- FR-A- 2 597 617
- GB-A- 2 053 516
- US-A- 3 934 250
- US-A- 4 240 596
- US-A- 5 268 680

## Description

La présente invention est relative aux systèmes d'observation et de visée.

Plus particulièrement, elle concerne un perfectionnement aux systèmes d'observation panoramiques opto-électroniques montés sur des véhicules, et notamment sur des hélicoptères de combat.

On connaît déjà des systèmes de ce type, notamment les appareils et viseurs gyrostabilisés pour hélicoptère et pour véhicules blindés de l'une des sociétés demanderesses.

Classiquement un tel système comporte un bloc optique pour une voie d'observation et de visée dans le domaine des rayonnements visibles (voie purement optique), ainsi que différents senseurs tels qu'une caméra infrarouge, une caméra de télévision et un laser, notamment pour la vision de nuit, l'écartométrie, la télémétrie et/ou la désignation de cible.

La ligne de visée de ces différents moyens est montée pivotante en site et en gisement par rapport à la structure du véhicule.

Les systèmes d'observation et de visée connus à ce jour sont particulièrement bien adaptés à l'observation, la reconnaissance et l'identification, ainsi qu'aux tirs, et de façon générale, à la plupart des missions militaires.

Le document FR-A-2 597 617 divulgue un système d'observation ou de visée comportant une tourelle pivotante. La tourelle porte un bloc optique comportant une caméra de télévision, une caméra thermique et une voie radar. Dans ce système, l'alignement entre les différents composants doit être renouvelé régulièrement.

Toutefois, certaines situations militaires peuvent exiger une intervention très en avant des forces armées dans la profondeur du dispositif ennemi.

Une mission de pénétration dans une zone contrôlée par l'ennemi nécessite entre autres de pouvoir détecter les menaces fortuites non connues lors de la préparation de la mission et qui apparaîtraient au cours de la progression.

Pour la réussite d'une telle mission, d'une part l'observation, telle qu'elle est possible aujourd'hui à l'aide de moyens optroniques orientés manuellement et ayant des limites de performance rapidement atteintes en fonction des conditions d'emploi et, d'autre part, l'identification sont des fonctions insuffisantes. Il faut leur adjoindre d'autres fonctions, telles que la veille et la détection tout temps, afin que l'équipage du véhicule (hélicoptère, véhicule terrestre...) puisse entreprendre suffisamment tôt des manoeuvres d'évitement, de contournement pour ne pas alerter l'adversaire et poursuivre la mission.

Or, les systèmes d'observation et de visée actuels ne permettent pas de réaliser une veille ou une détection tout temps.

C'est ainsi que la détection infrarouge, si elle permet une bonne résolution, présente une portée et un contraste qui sont affectés par l'humidité et les mauvaises conditions météorologiques.

Un but de l'invention est de proposer un système d'observation et de visée qui permet de pallier cet inconvénient.

L'invention propose quant à elle un système d'observation ou de visée pour véhicule comme défini dans la revendication 1.

Une telle configuration permet en effet de disposer d'une structure d'un encombrement optimal.

D'autres caractéristiques et avantages de l'invention ressortiront encore de la description qui suit. Cette description est purement illustrative et non limitative. Elle doit être lue en regard des dessins annexés sur lesquels :
- la figure 1 est une vue en perspective éclatée d'un viseur conforme à un mode de réalisation possible pour l'invention ;
- la figure 2 est une vue en coupe d'un détail du viseur de la figure 1.

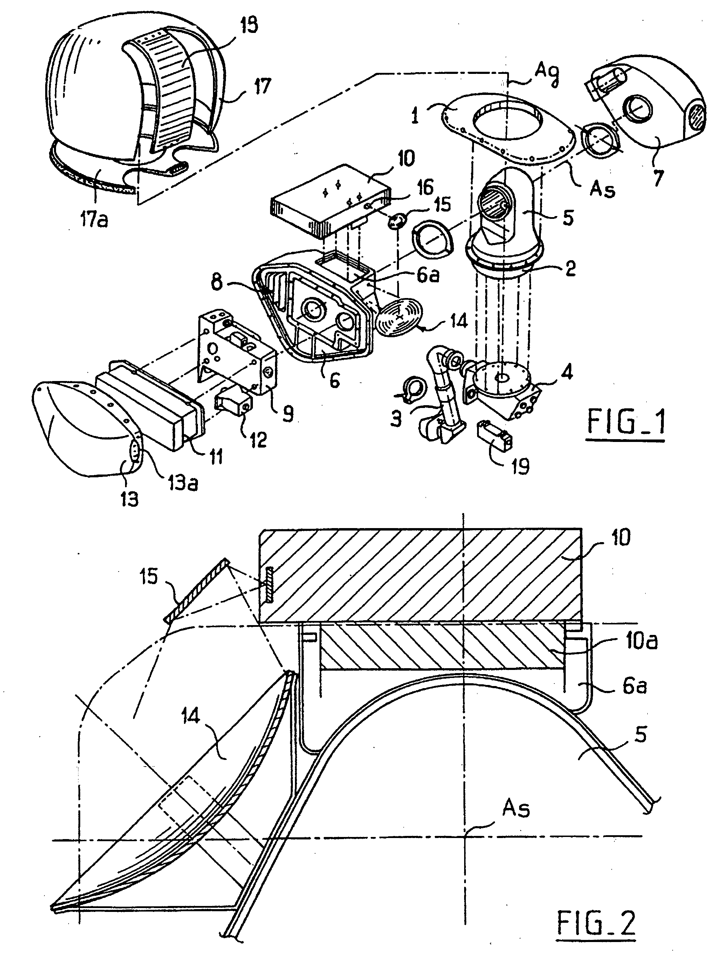

Le système d'observation et de visée gyrostabilisé illustré sur ces figures 1 et 2 comporte une structure 1 fixée au véhicule directement ou par l'intermédiaire d'une suspension, ainsi qu'une embase 2 reçue sur cette structure 1.

Cette embase 2 porte, à l'intérieur du véhicule, un boîtier optique 4, ainsi qu'une lunette ou un bras oculaire escamotable 3, d'une structure connue en soi.

De l'autre côté de la structure 1, cette embase 2 porte une borne 5 qui forme support pour les moyens des différentes voies d'observation et de détection. Cette borne 5 est tourillonnée sur l'embase 2 autour de l'axe Ag de gisement du système.

Cette borne 5 porte un boîtier de bloc optique 6 et une caméra thermique 7, qui sont disposés de façon diamétralement opposée par rapport à l'axe Ag.

Le boîtier 6 et la caméra thermique 7 sont tous deux montés rotatifs sur la borne 5 autour d'un axe As, qui est perpendiculaire à l'axe Ag et qui définit l'axe de rotation en site des différents moyens d'observation et de détection du système.

Ce boîtier 6 sert de support mécanique pour de nombreux éléments.

Il porte notamment un bloc optique 9, ainsi qu'une, unité de détection radar 10.

L'unité de détection radar 10 est fixée sur le boîtier 6, par l'intermédiaire d'un pied 10a que ladite unité 10 présente. Ce pied 10a est reçu dans un logement complémentaire 6a que présente la face supérieure du boîtier 6.

Le bloc optique 9 est reçu, avec une unité 11 d'émission radar et une caméra de télévision 12 fixées sur ledit bloc 9, dans un logement du boîtier 6 au droit de l'axe de site As.

Le bloc optique 9, l'unité 11 et la caméra 12 sont protégés dans le boîtier 6 par un capot 13 fixé sur le corps principal du boîtier 6.

Ce capot 13 présente au moins un hublot 13a à travers lequel le bloc optique 9, et la caméra 12 visualisent l'environnement du véhicule.

Le boîtier 6 porte également, dans l'un de ses modes de réalisation plus particulièrement illustré sur la figure 2, un réflecteur concave extérieur 14, qui, avec un réflecteur plan incliné 15, concentre les ondes millimétriques réfléchies par l'environnement du véhicule, sur le détecteur 16 de l'unité de réception radar 10.

D'autres procédés de concentration des ondes millimétriques peuvent être utilisés tels qu'un ou plusieurs réflecteurs, lentilles, sources multiples employés seuls ou en combinaison.

Le réflecteur millimétrique 14 est orienté de façon que sa direction d'observation coïncide avec celle du bloc optique 9, et des caméras 7 et 12.

Les différents éléments du système qui viennent d'être décrits et qui sont situés à l'extérieur de la structure 1 du véhicule, sont abrités sous un protecteur 17, fixé par une plaque 17a sur la borne 5 rotative en gisement par rapport à la structure 1.

Ce protecteur 17 présente un radome 18 placé devant le réflecteur millimétrique 14 et à travers lequel les observations millimétriques sont faites. Les observations visibles et infrarouges, ainsi que la télémétrie laser, et/ou la désignation laser, passent à travers les ouvertures pratiquées dans le protecteur 17, de part et d'autre du radome 18.

Avec une disposition du type de celle qui vient d'être décrite, les moyens d'observation dans le domaine du visible (voie purement optique), dans le domaine de l'infrarouge et dans le domaine des ondes millimétriques sont situés à proximité immédiate les uns des autres et présentent en permanence la même orientation en site et en gisement.

Les différentes images relevées par ces différentes voies sont stabilisées et centrées sur une même direction orientable en site et en gisement. Cette direction d'orientation est connue avec précision par rapport à la direction du véhicule ainsi que par rapport à la direction de déplacement de celui-ci. Ces différentes images centrées peuvent avoir un même champ d'observation ou des champs différents ou variables selon les fonctions utilisées : veille, recherche ou identification.

Le partage du même support de stabilisation par les capteurs optiques et millimétriques apporte une amélioration à la connaissance de la position des objets observés par rapport à des capteurs montés sur des supports de stabilisation distincts.

De façon avantageuse, le système comporte également des moyens pour, en fonction veille et/ou recherche, commander de façon automatique, sans intervention de l'observateur, les moyens optiques que constitue le bloc 9, les senseurs que constituent la caméra 12 et la caméra thermique 7, ainsi que les moyens millimétriques de façon que leur direction d'observation commune balaye automatiquement en site et/ou en gisement l'environnement du véhicule, notamment avec des amplitudes et à des vitesses désirées.

Dans une variante, pour augmenter l'indépendance d'exploration des moyens millimétriques, à leurs déplacements mécaniques autour des axes de site et de gisement, avec le boîtier 6 sur lesquels ils sont fixés, avec le bloc optique et les senseurs, est ajouté un balayage électronique connu en soi, des faisceaux ondes millimétriques. Ce balayage s'effectue en site et/ou en gisement, par rapport à la position dite canonique qui est la position du faisceau millimétrique lorsque son axe est orienté dans la même direction que les axes optiques du bloc optique et des senseurs.

Les images relevées par les différentes voies sont exploitées à bord du véhicule de telle sorte que les faiblesses et les limites que peuvent présenter l'une ou l'autre de ces différentes voies sont compensées par les avantages des autres voies.

Ainsi, alors que l'observation infrarouge présente une portée et un contraste qui sont fortement affectés par l'humidité, la brume, le brouillard ou la pluie, les ondes millimétriques sont peu sensibles à ces conditions millimétriques. Notamment, elles pénètrent le brouillard, alors que celui-ci est opaque à l'infrarouge.

De plus, la nature des paramètres détectés par les deux dispositifs infrarouge et radar sont de nature différente. Le dispositif infrarouge détecte l'émission naturelle des corps, c'est-à-dire leur émissivité tandis que le dispositif radar actif est basé sur la réflectivité de ceux-ci. Cette réflectivité est particulièrement importante, dans le cas d'objets métalliques.

Avantageusement, le système comporte des moyens de traitement et de visualisation qui permettent à un opérateur de visualiser soit chacune des différentes images des différentes voies indépendamment les unes des autres, soit une image combinée et enrichie à partir des images des différentes voies.

Notamment, une image synthétique peut être présentée sur un écran d'un moniteur 19 situé à proximité du bras oculaire 3 ou incorporé à celui-ci, par exemple en intégrant les données pertinentes en provenance des différentes voies.

Le système qui vient d'être décrit peut être utilisé selon plusieurs modes de fonctionnement.

Notamment, dans le principal mode de fonctionnement, la voie radar et la voie infrarouge sont utilisées de façon complémentaire pour réaliser un fonctionnement en mode veille ou détection.

De plus, l'unité radar 10 peut être utilisée pour avoir accès à des mesures de vitesse par analyse Doppler ou pour avoir accès à des mesures de distances.

Les différentes voies d'observation peuvent en outre être utilisées de façon complémentaires pour fournir aux opérateurs à l'intérieur du véhicule une analyse tactique du champ d'opération, ou encore une aide au pilotage, à l'anticollision et à la navigation ou une surveillance météorologique.

Ils peuvent également être utilisés pour fournir une aide aux conduites de tir en mode d'identification, de poursuite automatique, de désignation/illumination ou d'écartométrie.

Les systèmes d'observation ou de visée selon l'invention sont avantageusement utilisés pour des hélicoptères de combat et des véhicule terrestres.

## Revendications

1. Système d'observation ou de visée pour véhicule comportant une borne (5) pivotante autour d'un axe de gisement (Ag) par rapport au véhicule, la borne (5) portant un boîtier (6) d'un bloc optique (9) pour une voie d'observation et/ou de détection dans le domaine du visible et une caméra thermique (7) qui sont montés pivotants autour d'un axe de site (As) perpendiculaire à l'axe de gisement (Ag), **caractérisé en ce que** le boîtier (6) et la caméra thermique (7) sont disposés de façon symétrique par rapport à l'axe de gisement (Ag), **en ce que** le système comporte aussi une voie radar comportant une unité (11) d'émission radar située dans le bottier (6), une unité (10) de détection radar située sur le boîtier (6) et au droit de l'axe de gisement (Ag), des moyens de concentration (14, 15) des ondes radar sur l'unité (10) de détection radar qui sont situés sur le boîtier (6), et **en ce que** le bloc optique (9), la caméra thermique (7) et la voie radar sont solidaires de manière à présenter en permanence la même orientation en site et en gisement

2. Système selon la revendication 1, **caractérisé en ce que** les moyens de concentration (14, 15) comportent un réflecteur concave (14) et un réflecteur plan (15) incliné.

3. Système selon l'une quelconque des revendications précédentes, **caractérisé en ce que** les moyens de concentration (14, 15) sont situés entre le bloc optique (9) et la caméra thermique (7).

4. Système selon la revendication 3, **caractérisé en ce que** le système comporte un protecteur (17) qui comporte un radome (18) recouvrant les moyens de concentration (14, 15) et qui comporte aussi des ouvertures situées de part et d'autre du radome (18), en regard respectivement du bloc optique (9) et de la caméra thermique (7).

5. Système selon l'une quelconque des revendications précédentes, **caractérisé en ce que** les moyens de concentration (14, 15) sont des moyens de concentration dans le domaine des ondes millimétriques.

6. Système selon la revendication 5, **caractérisé en ce que** ies moyens de concentration des ondes millimétriques comportent des sources multiples réparties selon une loi particulière.

7. Système selon la revendication précédente, **caractérisé en ce que** les sources multiples réparties sont associées à au moins un réflecteur ou une lentille.

8. Système selon la revendication 5, **caractérisé en ce que** les moyens de concentration des ondes millimétriques comportent une ou plusieurs lentilles associées ou non à un ou plusieurs réflecteurs.

9. Système d'observation selon l'une des revendications précédentes, **caractérisé en ce qu'**il comporte des moyens de traitement et de visualisation qui permettent à un opérateur de visualiser soit chacune des différentes images des différentes voies d'observation et/ou de détection (7, 9, 10, 12) indépendamment les unes des autres, soit une image reconstituée à partir des images desdites différentes voies (7, 9, 10, 12).

10. Système selon l'une des revendications précédentes, **caractérisé en ce qu'**il comporte des moyens pour commander l'orientation des moyens optiques, des senseurs et des moyens millimétriques de façon que leur direction d'observation commune balaye automatiquement en site et/ou en gisement l'environnement du véhicule.

11. Système selon l'une des revendications précédentes, **caractérisé en ce que** les moyens millimétriques sont équipés d'un balayage électronique complémentaire.

## Patentansprüche

1. Beobachtungs- oder Zielsystem für Gefährte umfassend eine Befestigung (5), die gegenüber dem Fahrzeug um eine Drehwinkelachse (Ag) schwenkbar ist, wobei die Befestigung (5) ein Gehäuse (6) einer optischen Einheit (9) für einen Beobachtungs- und/oder Empfangskanal im sichtbaren Bereich, sowie eine Wärmekamera (7) trägt, die schwenkbar um eine zur Drehwinkelachse (Ag) senkrechte Höhenwinkelachse (As) montiert sind, **dadurch gekennzeichnet, daß** das Gehäuse (6) und die Wärmekamera (7) im Verhältnis zur Drehwinkelachse (Ag) auf symmetrische Weise angeordnet sind, sowie dadurch, daß das System desweiteren einen Radarkanal umfaßt, der im Gehäuse (6) eine Radarsendeeinheit (11), auf dem Gehäuse und rechts von der Drehwinkelachse (Ag) eine Radarempfangseinheit (10), sowie auf dem Gehäuse (6) angeordnet Mittel (14, 15) zum Fokussieren von Radarwellen auf die Radarempfangseinheit (10) umfaßt, sowie dadurch, daß die optische Einheit (9), die Wärmekamera (7) und der Radarkanal derart in Verbindung stehen, daß sie immer die selbe Orientierung bezüglich Drehwinkel und Höhenwinkel aufweisen.

2. System nach Anspruch 1, **dadurch gekennzeichnet, daß** die Fokussierungsmittel (14, 15) einen konkaven Reflektor (14) und einen geneigten planen Reflektor (15) umfassen.

3. System nach einem der vorstehenden Ansprüche, **dadurch gekennzeichnet, daß** die Fokussierungsmittel (14, 15) zwischen der optischen Einheit (9) und der Wärmekamera (7) liegen.

4. System nach Anspruch 3, **dadurch gekennzeichnet, daß** es einen Schutzkörper (17) umfaßt, der ein die Fokussierungsmittel (14, 15) bedeckendes Radom (18) umfaßt, und der auf beiden Seiten des Radoms (18) Öffnungen aufweist, die dem optischen System (9) bzw. der Wärmekamera (7) gegenüberliegen.

5. System nach einem der vorstehenden Ansprüche, **dadurch gekennzeichnet, daß** die Fokussierungsmittel (14, 15) Fokussierungsmittel im Millimeterwellenbereich sind.

6. System nach Anspruch 5, **dadurch gekennzeichnet, daß** die Millimeterwellen-Fokussierungsmittel Mehrfachspalte umfassen, die nach einem speziellen Gesetz aufgeteilt sind.

7. System nach einem der vorstehenden Ansprüche, **dadurch gekennzeichnet, daß** die aufgeteilten Mehrfachspalte zumindest einem Reflektor oder einer Linse zugeordnet sind.

8. System nach Anspruch 5, **dadurch gekennzeichnet, daß** die Millimeterwellen-Fokussierungsmittel eine oder mehrere Linsen aufweisen, die mit einem oder mehreren Reflektoren in Verbindung stehen können.

9. Beobachtungssystem nach einem der vorstehenden Ansprüche, **dadurch gekennzeichnet, daß** es Verarbeitungs- und Visualisierungsmittel umfaßt, die es einem Bediener ermöglichen entweder jedes der verschiedenen Bilder der verschiedenen Beobachtungs- und/oder Empfangskanäle (7, 9, 10, 12) unabhängig voneinander, oder ein Bild, das aus den Bildern der verschiedenen Kanäle (7, 9,, 10, 12) neu gebildet wird, sichtbar zu machen.

10. System nach einem der vorstehenden Ansprüche, **dadurch gekennzeichnet, daß** es Mittel umfaßt um die Orientierung der optischen Mittel, der Sensoren und der Millimeterwellen-Mittel, derart zu steuern, daß ihre gemeinsame Beobachtungsrichtung automatisch einen Scan der Fahrzeugumgebung in Drehwinkel und/oder Höhenwinkel durchführt.

11. System nach einem der vorstehenden Ansprüche, **dadurch gekennzeichnet, daß** die Millimeterwellen-Mittel mit einem zusätzlichen elektronischen Scanner ausgestattet sind.

## Claims

1. An observation or aiming system for a vehicle, the system comprising a post (5) pivoting about a bearing axis (Ag) relative to the vehicle, the post (5) carrying a thermal camera (7) and a body (6) for an optical block (9) for observation and/or detection using a channel in the visible range which are mounted to pivot about an elevation axis (As) perpendicular to the bearing axis (Ag), the system being **characterized in that** the body (6) and the thermal camera (7) are disposed symmetrically relative to the bearing axis (Ag), and **in that** the system also includes a radar channel including a radar transmitter unit (11) situated in the body (6) and a radar detection unit (10) situated in the body (6) and, close to the bearing axis (Ag), concentration means (14, 15) situated in the body (6), for concentrating the radar waves on the radar detection unit (10), and **in that** the optical block (9), the thermal camera (7), and the radar channel are secured so as to always have the same orientation in elevation and in bearing.

2. A system according to claim 1, **characterized in that** the concentration means (14, 15) comprise a concave reflector (14) and an inclined plane reflector (15).

3. A system according to any preceding claim, **characterized in that** the concentration means (14, 15) are situated between the optical block (9) and the thermal camera (7).

4. A system according to claim 3, **characterized in that** the system includes a protector (17) which includes a radome (18) covering the concentration means (14, 15) and which also includes openings situated either side of the radome (18) respectively facing the optical block (9) and the thermal camera (7).

5. A system according to any preceding claim, **characterized in that** the concentration means (14, 15) are concentration means in the millimeter wave range.

6. A system according to claim 5, **characterized in that** the millimeter wave concentration means comprise multiple sources distributed in a particular relationship.

7. A system according to claim 6, **characterized in that** the distributed multiple sources are associated with at least one reflector or a lens.

8. A system according to claim 5, **characterized in that** the millimeter wave concentration means include one or more lenses optionally associated with one or more reflectors.

9. An observation system according to any preceding claim, **characterized in that** it includes processing and display means enabling an operator to view either each of the various images of the various observation and/or detection channels (7, 9, 10, 12) independently of one another, or else to view an image reconstituted from the images of said various channels (7, 9, 10, 12).

10. A system according to any preceding claim, **characterized in that** it includes means for controlling the orientation of the optical means, of the sensors, and of the millimeter wave means so as to cause their common observation direction to scan the environment of the vehicle automatically in elevation and/or bearing.

11. A system according to any preceding claim, **characterized in that** the millimeter wave means are fitted with additional electronic scanning.
